# NEUE EUROPÄISCHE PATENTSCHRIFT

(11) **EP 3 529 118 B2**
(45) Veröffentlichungstag und Bekanntmachung des Hinweises auf die Entscheidung über den Einspruch: **03.07.2024**
(45) Hinweis auf die Patenterteilung: 02.12.2020
(21) Anmeldenummer: 17783462.9
(22) Anmeldetag: 10.10.2017
(51) Int. Cl.: B60T 13/74

(54) **SYSTEM MIT GETRENNTEN STEUEREINHEITEN FÜR DIE STELLEINHEITEN EINER ELEKTRISCHEN PARKBREMSE**
SYSTEM COMPRISING SEPARATE CONTROL UNITS FOR THE ACTUATION UNITS OF AN ELECTRIC PARKING BRAKE
SYSTÈME COMPRENANT DES UNITÉS DE COMMANDE SÉPARÉES POUR UN FREIN DE STATIONNEMENT ÉLECTRIQUE

(30) Priorität: 20.10.2016 DE 102016012617
(43) Veröffentlichungstag der Anmeldung: 28.08.2019
(73) Patentinhaber: ZF Active Safety GmbH, 56070 Koblenz (DE)
(72) Erfinder: MICHELS, Erwin, 56829 Kail (DE); OHLIG, Benedikt, 56179 Vallendar (DE); FUCHS, Matthias, 56068 Koblenz (DE)
(74) Vertreter: Prinz & Partner mbB
(86) Internationale Anmeldenummer: PCT/EP2017/075729
(87) Internationale Veröffentlichungsnummer: WO 2018/073039

(56) Entgegenhaltungen:
- EP-A1- 2 719 593
- WO-A1-2006/061238
- DE-A1-102005 039 314
- DE-A1-102011 084 534
- DE-A1-102012 010 562
- DE-A1-102014 214 375
- DE-A1-102015 200 928

## Beschreibung

### Technisches Gebiet

Die vorliegende Offenbarung betrifft allgemein das Gebiet der in einem Fahrzeug zu verbauenden Steuereinheiten. Konkret wird die Ansteuerung einer elektrischen Parkbremse beschrieben.

### Hintergrund

Elektrische Parkbremsen (EPB) haben Einzug in eine Vielzahl moderner Kraftfahrzeuge gefunden. Derartige EPB-Systeme umfassen herkömmlicherweise zwei elektrische Stelleinheiten an verschiedenen Fahrzeugrädern sowie eine den Stelleinheiten zugeordnete EPB-Steuereinheit.

Bei einem hydraulischen Bremssystem sind die EPB-Stelleinheiten an den Radbremsen zweier gegenüberliegender Fahrzeugräder verbaut und ermöglichen eine elektrische Betätigung eines jeweiligen Radbremszylinders im Parkbremsbetrieb (Einzelheiten hierzu finden sich beispielsweise in der DE 197 32 168 A). Im Normalbremsbetrieb werden die Radbremszylinder hingegen hydraulisch betätigt. Hierzu stehen die Radbremszylinder in fluider Verbindung mit einem Hauptzylinder.

Bei einem herkömmlichen hydraulischen Bremssystem ist der Hauptzylinder mechanisch mit einem Bremspedal gekoppelt. Bei einem so-genannten Brake-By-Wire-System ist das Bremspedal hingegen - jedenfalls im Normalbremsbetrieb - mechanisch vom Hauptzylinder entkoppelt. Die Bremspedalbetätigung wird hier sensorisch erfasst und zur Ansteuerung einer auf den Hauptzylinder einwirkenden elektrischen Stelleinheit elektronisch aufbereitet. Ferner sind elektrische Bremskraftverstärker bekannt (auch Electric Brake Boost, EBB, genannt), bei denen eine mittels des Bremspedals auf den Hauptzylinder eingeleitete Kraft durch eine ebenfalls auf den Hauptzylinder einwirkende elektrische Stelleinheit verstärkt wird.

Aufgrund des Kostendrucks in der Fahrzeugindustrie ist es wünschenswert, die Systemkosten durch Einsparungen zu verringern. Gleichzeitig darf die Systemsicherheit nicht unter den entsprechenden Einsparungen leiden. Diese Vorgaben gelten insbesondere auch für das im Fahrzeug verbaute Bremssystem.

In diesem Zusammenhang wird beispielsweise in der WO 2006/061238 A1 die Ansteuerung von EPB-Stelleinheiten mittels der einem Automatikgetriebe zugeordneten Steuereinheit vorgeschlagen. Auf diese Weise kann eine herkömmliche Getriebeverriegelung in Form einer Parksperre eingespart werden. In der WO 2006/061238 A1 finden sich ferner unterschiedliche Ansätze für eine redundante Auslegung der Kommunikationsverbindungen in einem EPB-System, um die Systemsicherheit zu erhöhen.

Die Druckschrift DE 10 2012 010 562 A1 offenbart ein Feststellbremsensystem für ein Fahrzeug, insbesondere für einen Kraftwagen, welches zwei Steuereinheiten zum Steuern von zwei Aktuatoren umfasst. Die Aktuatoren sind dazu ausgelegt, jeweilige Radbremsen zu betätigen. Ein weiteres Bremssystem mit wenigstens einer betätigbaren Parkbremse ist aus DE 10 2015 200 928 A1 bekannt.

### Kurzer Abriss

Der vorliegenden Offenbarung liegt die Aufgabe zugrunde, ein verbessertes System aus Steuereinheiten im Zusammenhang mit einer EPB anzugeben.

Gemäß einem ersten Aspekt wird ein System nach Anspruch 1 für ein Kraftfahrzeug angegeben.

Die elektrischen Parkbremsstelleinheiten können auf einem elektromechanischen Prinzip basieren. In andere Varianten können die elektrischen Parkbremsstelleinheiten elektrohydraulisch oder elektropneumatisch betrieben werden.

Bei dem Kraftfahrzeug-System gemäß dem ersten Aspekt kann ferner ein Ansteuersystem vorgesehen sein, welches zur Ansteuerung der ersten elektrischen Parkbremsstelleinheit und der zweiten elektrischen Parkbremsstelleinheit vorgesehen ist. Das Ansteuersystem kann aus der ersten Steuereinheit und der zweiten Steuereinheit bestehen. So kann insbesondere keine weitere Steuereinheit im Fahrzeug vorgesehen sein, welche eine Ansteuerung der ersten elektrischen Parkbremsstelleinheit und/oder der zweiten elektrischen Parkbremsstelleinheit gestattet.

Gleichermaßen kann gemäß diesem Aspekt eine der ersten und zweiten Steuereinheiten ausgelegt sein, ein Automatikgetriebe anzusteuern.

In ähnlicher Weise kann bei dem Kraftfahrzeug-System gemäß dem ersten Aspekt eine dritte Steuereinheit mit wenigstens einem dritten Mikroprozessor vorgesehen sein. Diese dritte Steuereinheit kann dazu ausgelegt sein, das Automatikgetriebe anzusteuern.

Vorliegend umfasst der elektrische Bremskrafterzeuger eine dritte elektrische Stelleinheit, die ausgebildet ist, zur Erzeugung wenigstens eines Bremskraftanteils auf einen Hauptzylinder eines elektrohydraulischen Bremssystems einzuwirken. Der elektrische Bremskrafterzeuger kann als Bremskraftverstärker eingesetzt werden, um einen vom Fahrer mechanisch in den Hauptzylinder eingeleiteten Bremskraftanteil elektrisch zu verstärken. Alternativ hierzu kann die dritte elektrische Stelleinheit dazu ausgebildet sein, die gesamte Bremskraft durch Einwirken auf den Hauptzylinder zu erzeugen (beispielsweise im Rahmen eines autonomen Fahrens oder in einem Brake-By-Wire-Betrieb).

Bei dem hier vorgestellten Aspekt ist eine Eingabe-Einrichtung vorhanden, die ausgebildet ist, einen Parkbremsbefehl zu erzeugen. Die Eingabe-Einrichtung kann beispielsweise eine von einem Fahrer bedienbarer Taster, Schalter, usw. sein. Die Eingabe-Einrichtung ist zumindest mit der ersten Steuereinheit elektrisch gekoppelt, um der ersten Steuereinheit den Parkbremsbefehl zu signalisieren. Zusätzlich hierzu kann die Eingabe-Einrichtung mit der zweiten Steuereinheit oder der dritten Steuereinheit elektrisch gekoppelt sein, um der zweiten Steuereinheit den Parkbremsbefehl zu signalisieren. Die erste Steuereinheit wiederum ist dazu ausgebildet, die erste elektrische Parkbremsstelleinheit in Abhängigkeit des Parkbremsbefehls anzusteuern. In gleicher Weise ist zusätzlich hierzu die zweite Steuereinheit ausgebildet, die zweite elektrische Parkbremsstelleinheit in Abhängigkeit des Parkbremsbefehls anzusteuern.

Der Parkbremsbefehl kann allgemein auf ein Aktivieren (also Zuspannen) oder ein Lösen der Parkbremse gerichtet sein. Dementsprechend kann die Ansteuerung der jeweiligen Steuereinheit auf ein Aktivieren oder Lösen der entsprechenden Parkbremsstelleinheit gerichtet sein.

Bei dem hier vorgestellten Aspekt ist ferner eine Kommunikationsverbindung zwischen der ersten Steuereinheit und der zweiten Steuereinheit (und optional vorgesehenen weiteren Steuereinheiten) vorgesehen. Die erste Steuereinheit und die zweite Steuereinheit (sowie optional vorgesehene weitere Steuereinheiten) sind dazu ausgelegt, über die Kommunikationsverbindung miteinander zu kommunizieren. Die Kommunikationsverbindung kann redundant ausgelegt sein. Beispielsweise können zwei parallel zueinander ausgebildete Bus- oder Leitungssysteme vorgesehen werden.

Die erste Steuereinheit ist dazu ausgelegt, den Parkbremsbefehl über die Kommunikationsverbindung an die zweite Steuereinheit zu kommunizieren. Mittels dieser Kommunikation veranlasst die erste Steuereinheit die zweite Steuereinheit zur Ansteuerung der zweiten elektrischen Parkbremseinstelleinheit auf der Grundlage des Parkbremsbefehls.

Gemäß dem ersten Aspekt des hier beschriebenen Kraftfahrzeug-Systems kann die dritte Steuereinheit dazu ausgelegt sein, ein Automatikgetriebe anzusteuern, das ohne mechanische Getriebesperre ausgebildet ist. In diesem Fall kann die dritte Steuereinheit die zweite elektrische Parkbremsstelleinheit in einem Getriebesperremodus ansteuern. Der Getriebesperremodus kann insbesondere dadurch aktiviert werden, dass eine dem Getriebe zugeordnete Eingabe-Einrichtung vom Fahrer in eine Parkstellung gebracht wird. Der Getriebesperremodus umfasst auch die Situation, dass die entsprechende Eingabe-Einrichtung des Automatikgetriebes von der Parkstellung in eine Fahrstellung gebracht wird. Mit der Eingabe-Einrichtung lassen sich damit unterschiedliche Getriebesperrebefehle erzeugen, je nachdem, ob die Parkstellung eingenommen oder verlassen wird. Während im ersten Fall die Parkbremsstelleinheiten aktiviert werden, wird im zuletzt genannten Fall ein Lösen der Parkbremsstelleinheiten in die Wege geleitet.

Insbesondere gemäß dem ersten Aspekt des hier vorgestellten Kraftfahrzeug-Systems kann die dritte Steuereinheit dazu ausgelegt sein, im Getriebesperremodus über die Kommunikationsverbindung mit der ersten Steuereinheit zu kommunizieren, um diese zur Ansteuerung der ersten elektrischen Parkbremsstelleinheit auf der Grundlage des Getriebesperrebefehls zu veranlassen.

Bei dem hier vorgestellten Aspekt kann das System ferner ein erstes elektrisches Versorgungssystem (beispielsweise in Gestalt einer Batterie oder eines Akkumulators) für die erste Steuereinheit und/oder die erste elektrischen Parkbremsstelleinheit umfassen. In gleicher Weise kann ein zweites elektrisches Versorgungssystem für die zweite Steuereinheit und/oder die zweite elektrische Parkbremsstelleinheit vorhanden sein.

Das erste Fahrzeugrad kann allgemein ein rechtes Vorderrad sein. Zusätzlich oder alternativ hierzu kann das zweite Fahrzeugrad ein linkes Vorderrad sein. In anderen Varianten kann das erste Fahrzeugrad ein rechtes Hinterrad sein, während das zweite Fahrzeugrad ein linkes Hinterrad ist. Auch eine Diagonalaufteilung kann erfolgen, demgemäß das erste Fahrzeugrad an einer Vorderachse angeordnet ist und das zweite Fahrzeugrad diagonal gegenüberliegend an einer Hinterachse.

Ferner kann wenigstens ein elektrischer Generator vorgesehen sein. Die Funktion des wenigstens einen Generators kann von einem elektrischen Antrieb des Kraftfahrzeugs bereitgestellt werden (der dann im Generatorbetrieb arbeitet) oder von einer ausschließlich im Generatorbetrieb betriebenen elektrischen Maschine.

Ein elektrischer Generator kann pro Fahrzeugachse oder pro Fahrzeugrad vorgesehen sein. In einer Variante ist der wenigstens eine elektrische Generator mit dem rechten Hinterrad und/oder dem linken Hinterrad des Fahrzeugs koppelbar. In einer alternativen oder kumulativen Ausgestaltung ist der wenigstens eine elektrische Generator mit dem rechten Vorderrad und/oder dem linken Vorderrad des Fahrzeugs koppelbar. Eine derartige Kopplung kann insbesondere selektiv dann vorgenommen werden, wenn mittels des Generatorbetriebs eine Bremswirkung an dem entsprechenden Hinterrad erzeugt werden soll (z. B. im Rahmen eines autonomen Fahrens, einschließlich eines autonomen Einparkens).

Allgemein sind die erste und Steuereinheit und die zweite Steuereinheit sowie die optional vorgesehene dritte Steuereinheit räumlich getrennt voneinander. Diese räumliche Trennung ist durch separate Gehäuse für die Steuereinheiten bewerkstelligt. Auch können die einzelnen Steuereinheiten an unterschiedlichen Orten im Fahrzeug verbaut sein.

Gemäß einem zweiten Aspekt wird ein Verfahren zum Ansteuern eines Kraftfahrzeug-Systems nach Anspruch 7 angegeben.

Die Ansteuerschritte des Verfahrens gemäß dem zweiten Aspekt können im Wesentlichen gleichzeitig durchgeführt werden. Ferner umfasst das Verfahren das Erfassen eines Ansteuerbefehls, wobei der Ansteuerbefehl eine Parkbremsanforderung seitens des Fahrers, eine Getriebesperranforderung seitens des Fahrers oder eine Notbremsanforderung ist, wobei das Ansteuern der ersten elektrischen Parkbremsstelleinheit und der zweiten elektrischen Parkbremsstelleinheit auf das Erfassen des Ansteuerbefehls erfolgt.

Gemäß einem weiteren Aspekt wird ein Computerprogramm mit Programmcode angegeben zum Durchführen des Verfahrens gemäß dem dritten oder dem vierten Aspekt, wenn das entsprechende Verfahren von der ersten Steuereinheit und der zweiten Steuereinheit durchgeführt wird. Auch wird ein Steuergerätesystem angegeben, welches das Computerprogramm sowie die erste Steuereinheit und die zweite Steuereinheit, die zum Ausführen des Computerprogramms ausgebildet sind, umfasst.

### Kurze Beschreibung der Zeichnungen

Weitere Aspekte, Einzelheiten und Vorteile der vorliegenden Offenbarung ergeben sich aus der nachfolgenden Beschreibung von Ausführungsbeispielen unter Bezugnahme auf die Figuren. Es zeigen:
- Fig. 1: ein erstes Ausführungsbeispiel eines redundant ausgelegten Fahrzeug-Systems;
- Fig. 2: eine weitere nicht beanspruchte Konfiguration eines redundant ausgelegten Fahrzeug-Systems;
- Fig. 3: ein Ausführungsbeispiel einer Steuereinheit, insbesondere für ein Fahrzeug-System; und
- Fign. 4 & 5: Ablaufdiagramme von Verfahren gemäß Ausführungsbeispielen der vorliegenden Offenbarung

### Detaillierte Beschreibung

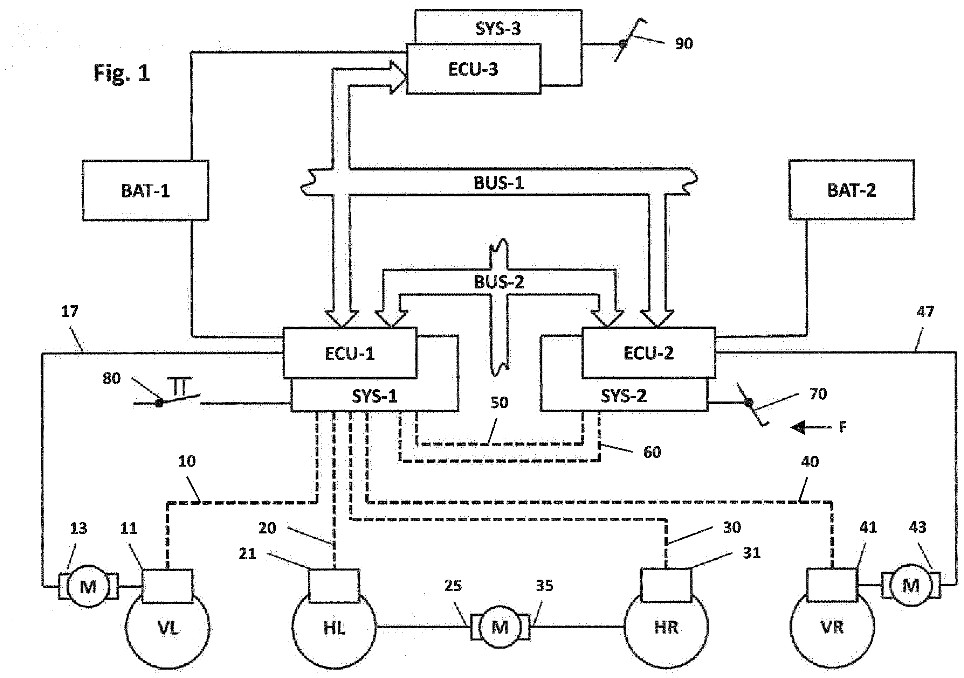

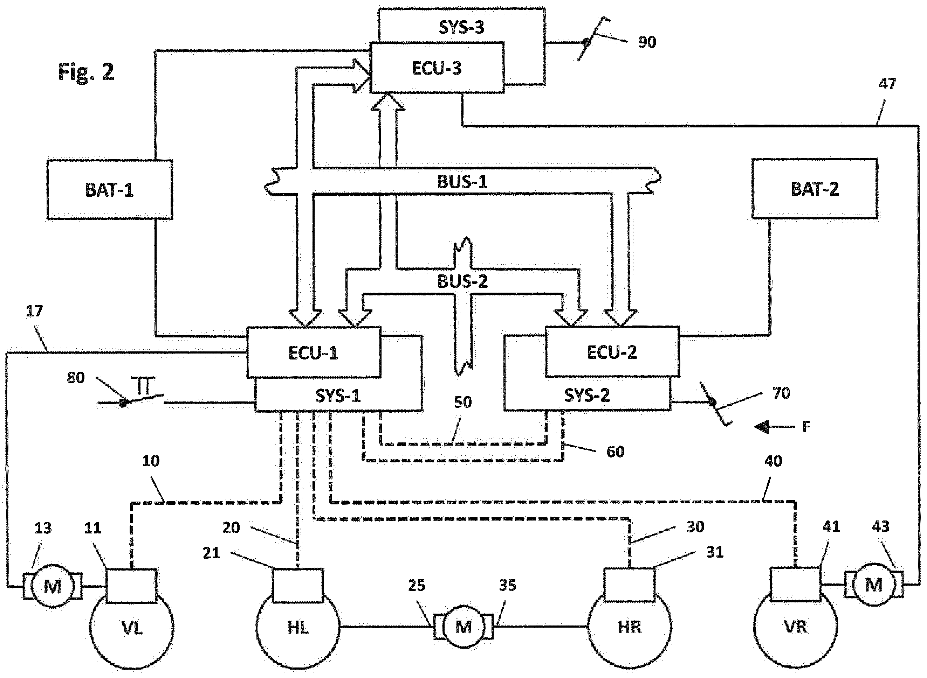

Ausführungsbeispiele der vorliegenden Offenbarung werden nachfolgend anhand der Zeichnungen erläutert, wobei in Fig. 1 und Fig. 2 jeweils ein elektronisch gesteuertes Fahrzeug-System schematisch dargestellt ist.

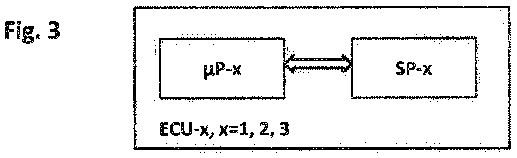

Das jeweilige System gemäß Fig. 1 und Fig. 2 umfasst ein erstes Teilsystem SYS-1 und ein zweites Teilsystem SYS-2. Das erste Teilsystem SYS-1 umfasst eine erste elektronische Steuereinheit (Electronic Control Unit, ECU) ECU-1 und das zweite Teilsystem SYS-2 umfasst eine zweite elektronische Steuereinheit ECU-2. Jede der beiden Steuereinheiten ECU-1 und ECU-2 umfasst wenigstens einen Mikroprozessor µP und wenigstens eine Speichereinrichtung SP, wie in Fig. 3 dargestellt. Die jeweilige Speichereinrichtung SP, beispielsweise ein Halbleiterspeicher, enthält Programmcode zur Ausführung durch den jeweiligen Mikroprozessor µP.

Für eine elektrische Energieversorgung der beiden Teilsysteme SYS-1 und SYS-2 einschließlich der beiden elektronischen Steuereinheiten ECU-1 und ECU-2 werden jeweils ein erster Akkumulator BAT-1 und ein zweiter Akkumulator BAT-2 verwendet. Die erste elektronische Steuereinheit ECU-1 und ggf. weitere Komponenten des ersten Teilsystems SYS-1 werden (wenigstens) an dem ersten Akkumulator BAT-1 betrieben; die zweite elektronische Steuereinheit ECU-2 und ggf. weitere Komponenten des zweiten Teilsystems SYS-2 werden (wenigstens) an dem zweiten Akkumulator BAT-2 betrieben. Dadurch besitzt das Gesamtsystem eine hohe Betriebssicherheit, da bei einem fehlerhaften ersten Ackumulator BAT-1 (wenigstens) die zweite elektronische Steuereinheit ECU-2 (und ggf. das gesamte zweite Teilsystem SYS-2) weiter betrieben werden kann. Ebenso kann bei einem fehlerhaften zweiten Akkumulator BAT-2 (wenigstens) die erste elektronische Steuereinheit ECU-1 (und ggf. das gesamte erste Teilsystem SYS-1) weiter betrieben.

Zur Kommunikation (z. B. für Datenübertragungen, Übertragungen von Ansteuerbefehlen, usw.) zwischen den beiden Teilsystemen SYS-1 und SYS-2 und insbesondere zwischen den beiden elektronischen Steuereinheiten ECU-1 und ECU-2 sind ein erstes Bussysteme BUS-1 und ein zweites Bussystem BUS-2 vorgesehen. Für eine hohe Betriebssicherheit des Gesamtsystems sind die beiden Bussysteme BUS-1 und BUS-2 in Bezug auf die beiden Teilsysteme SYS-1 und SYS-2 (insbesondere in Bezug auf die beiden elektronischen Steuereinheiten ECU-1 und ECU-2) in redundanter Weise parallel angeordnet. So kann bei einem fehlerhaften Bussystem BUS-1 oder BUS-2 mittels des anderen Bussystems BUS-2 oder BUS-1 die Kommunikation weiter aufrechterhalten werden. Da Fahrzeuge heute ohnehin mit Bussystemen, z.B. einem CAN-Bus (Controller Area Network), ausgestattet sind, können solche für zumindest eines der beiden Bussysteme BUS-1 und BUS-2 mitverwendet werden, um zusätzlichen Aufwand einzusparen.

An das erste Teilsystem SYS-1, genauer gesagt an eine hydraulische Steuereinheit (Hydraulic Control Unit, HCU) desselben, sind über Hydraulikleitungen 10, 20, 30 und 40 hydraulisch betätigbare Radbremsen 11, 21, 31 und 41 des Fahrzeugs angeschlossen. Bei dem ersten Teilsystem SYS-1 handelt es sich in den Ausführungsbeispielen um ein elektrohydraulisches System, das ein fahrerunabhängiges, individuelles Erzeugen und Regeln der Bremsdrücke in den Radbremsen 11, 21, 31 und 41 ermöglicht. Das erste Teilsystem SYS-1 umfasst ein Antiblockier- und/oder Fahrdynamikregelsystem (ABS bzw. Electronic Stability Control, ESC).

Das zweite Teilsystem SYS-2 ist über Hydraulikleitungen 50, 60 mit dem ersten Teilsystem SYS-1 verbunden. Das zweite Teilsystem SYS-2 ist in den Ausführungsbeispielen dazu ausgelegt, Bremsdrücke für das erste Teilsystem SYS-1 und/oder die Radbremsen 11, 21, 31 und 41 zu erzeugen. Zum Verständnis der Möglichkeiten, die sich aus der vorstehenden und den nachfolgenden "und/oder"-Verknüpfungen zwischen den Begriffen "das erste Teilsystem SYS-1" und "die Radbremsen 11, 21, 31 und 41" ergeben, seien beispielhaft folgende Varianten erläutert:
- Das zweite Teilsystem SYS-2 erzeugt die Bremsdrücke über die Hydraulikleitungen 50, 60 unmittelbar für die Radbremsen 11, 21, 31 und 41, wenn das erste Teilsystem SYS-1 passiv ist, also keine (z. B. überlagernde) radindividuelle Regeleingriffe, wie etwa eine ABS- oder ESC-Regelung, ausgeführt wird.
- Ist jedoch das erste Teilsystem SYS-1 aktiv, um z. B. eine ABS- oder ESC-Regelung auszuführen, so kann in machen Varianten das zweite Teilsystem SYS-2 über die Hydraulikleitungen 50, 60 dem ersten Teilsystem SYS-1 eingangsseitig Bremsdrücke bereit stellen, so dass das erste Teilsystem SYS-1 ausgangsseitig Bremsdrücke für die Radbremsen 11, 21, 31 und 41 radindividuell regeln kann (z. B. durch Halten, Erhöhen oder Erniedrigen des Bremsdrucks). Eine solche Regelung kann auch dann stattfinden, wenn das zweite Teilsystem SYS-2 keine Bremsdrücke bereit stellt. Zu diesem Zweck umfasst das erste Teilsystem SYS-1 einen separaten Bremsdruckgeber (z. B. eine elektrisch betriebene Hydraulikpumpe).
- Da nicht immer an allen Radbremsen gleichzeitig individuelle Regeleingriffe erforderlich sind, z.B. wenn im Rahmen einer ESC-Regelung nur ein kurvenäußeres Vorderrad abzubremsen ist, um ein Untersteuern des Fahrzeugs zu verhindern, sind im praktischen Betrieb Kombinationen der beiden oben genannten Möglichkeiten üblich.

Bei dem zweiten Teilsystem SYS-2 handelt es sich allgemein um einen als Bremsdruckgebersystem ausgelegtes Bremskrafterzeuger, wie etwa eine Baugruppe mit einem elektrischen Bremskraftverstärker (EBB), der bei hydraulischer Systemauslegung auf einen Hauptzylinder einwirkt. Das zweite Teilsystem SYS-2 ist als Bremskrafterzeuger dazu ausgebildet, eine oder mehrere der folgenden Funktionen zu erfüllen:
- einen vom Fahrer über ein Bremspedal 70 angeforderten Bremswunsch zu erfassen, der auf eine Verzögerung des Kraftfahrzeugs gerichtet ist;
- eine vom Fahrer über das Bremspedal 70 eingeleitete Betätigungskraft F mittels einer elektrischen Stelleinheit nach elektrischem, elektrohydraulischem oder elektropneumatischem Prinzip zu verstärken;
- die Bremsdrücke für das erste Teilsystem SYS-1 und/oder die Radbremsen 11, 21, 31 und 41 mittels einer elektrischen Stelleinheit nach elektrischem, elektrohydraulischem oder elektropneumatischem Prinzip zu erzeugen.

So ist das zweite Teilsystem SYS-2 unter anderem in einer oder mehreren der folgenden Betriebsarten betreibbar:
- Für die Funktion einer hydraulischen Betriebsbremse, also bei Normalbremsungen, wird die vom Fahrer über das Bremspedal 70 aufgebrachte Betätigungskraft F mittels einer elektrischen Stelleinheit verstärkt, wobei in einem Hauptzylinder die Bremsdrücke für das erste Teilsystem SYS-1 und/oder die Radbremsen 11, 21, 31 und 41 in Abhängigkeit der verstärkten Betätigungskraft, vorzugsweise gemäß einer vorherbestimmten Verstärkerkennlinie, erzeugt werden.
- Ist das Bremssystem und insbesondere das zweite Teilsystem SYS-2 als BBW-System (Brake By Wire) ausgelegt, so wird für die Funktion der Betriebsbremse und damit für Normalbremsungen der vom Fahrer über das Bremspedal 70 eingeleitete Verzögerungswunsch erfasst, um in dessen Abhängigkeit Bremsdrücke für das erste Teilsystem SYS-1 und/oder die Radbremsen 11, 21, 31 und 41 zu erzeugen. Dabei wird der Verzögerungswunsch mittels einer geeigneten Sensorik, die die am Bremspedal 70 eingeleitete Kraft- und/oder Wegcharakteristik erfasst, ermittelt. Der Verzögerungswunsch wird dann von der elektronischen Steuereinheit ECU-2 in ein Ansteuersignal für eine elektrische Stelleinheit umgesetzt, die auf den Hauptzylinder einwirkt. Das Bremspedal 70 bleibt hingegen vom Hauptzylinder entkoppelt. Ein Simulator kann dem Fahrer trotz der Entkopplung ein konventionelles Pedalgefühl vermitteln.
- Für den Fall einer Notbremsung, beispielsweise einer Bremsung, die trotz eines fehlerhaften Akkumulators BAT-2 gewährleistet sein muss, werden die Bremsdrücke für das erste Teilsystem SYS-1 und/oder die Radbremsen 11, 21, 31 und 41 entweder entsprechend einer gegenüber Normalbremsungen reduzierten Verstärkerkennlinie oder unmittelbar in Abhängigkeit der vom Fahrer über das Bremspedal 70 in den Hauptzylinder eingeleiteten Betätigungskraft F erzeugt. Dies geschieht bei einem BBW-System z.B. gemäß dem Push-Through-Prinzip, bei dem die Entkopplung von Bremspedal 70 und Hauptzylinder aufgehoben wird.
- Für den Fall einer automatischen Bremsung, also einer Bremsung, die unabhängig von einer vom Fahrer über das Bremspedal 70 eingeleiteten Betätigung erfolgt, werden die Bremsdrücke für das erste Teilsystem SYS-1 und/oder die Radbremsen 11, 21, 31 und 41 in Abhängigkeit der für die automatische Bremsung angeforderten Parameter, z. B. Fahrzeugverzögerung und Fahrzeuggeschwindigkeit, erzeugt. Automatische Bremsungen finden z. B. im Rahmen einer als ACC-Funktion (Adaptive Cruise Control) bekannten adaptiven Regelung der Fahrzeuggeschwindigkeit oder einer als ESC-Funktion bekannten Fahrdynamikregelung, sowie beim autonomen Fahren im AD-Betrieb (Autonomous Driving) oder RCP-Betrieb (Remote Controlled Parking) des Fahrzeugs statt.
- Für den Fall einer regenerativen Bremsung, also einer Bremsung, bei der die beim Bremsen abgebaute kinetische Energie eines Elektro- oder Hybridfahrzeugs in elektrische Energie umgewandelt und in einen Akkumulator (z.B. BAT-1 und/oder BAT-2) oder dergleichen zurückgespeist wird, wird zunächst, sofern es sich nicht um eine automatische Bremsung handelt, der vom Fahrer über das Bremspedal 70 eingeleitete Verzögerungswunsch ermittelt. In dessen Abhängigkeit wird ein elektrischer Antrieb 25, 35 des Fahrzeugs, der hier auf die beiden hinteren Räder HL und HR wirkt, als Generator betrieben. Handelt es sich demgegenüber um eine automatische Bremsung, so erfolgt der Generatorbetrieb des elektrischen Antriebs 25, 35 in Abhängigkeit des für die automatische Bremsung erforderlichen Verzögerung. Wenn das regenerative Bremsmoment nicht ausreichend ist, also der Verzögerungswunsch (keine automatische Bremsung) oder die erforderliche Verzögerung (automatische Bremsung) größer als die im Generatorbetrieb maximal erreichbare Verzögerung ist, wird zur Kompensation zusätzlich ein hydraulisches Bremsmoment aufgebracht, indem entsprechende Bremsdrücke für das erste Teilsystem SYS-1 und/oder die Radbremsen 11, 21, 31 und 41 erzeugt und eingestellt werden. Es sei angemerkt, dass der elektrische Antrieb des Fahrzeugs natürlich auch anstatt auf die beiden hinteren Räder HL, HR auch auf die beiden vorderen Räder VL, VR oder auf alle vier Räder VL, VR, HL, HR wirken kann.

Sofern das erste Teilsystem SYS-1 dazu eingerichtet ist, Bremsdrücke nach einem elektrohydraulischen Prinzip selbst zu erzeugen, was beispielsweise bei einem ESC-System regelmäßig der Fall ist, kann das erste Teilsystem SYS-1 Bremsdrücke in einer oder mehreren der Radbremsen 11, 21, 31 und 41 unabhängig von dem zweiten Teilsystem SYS-2 erzeugen und einstellen. Von daher ist es in bestimmten Ausführungsvarianten möglich, dass automatische Bremsungen, insbesondere die ACC- und ESC-Funktion, vom ersten Teilsystem SYS-1 autark ausgeführt werden. Ein weiterer Aspekt in diesem Zusammenhang ist, dass in diesem Fall eine hydraulische Betätigung der Radbremsen 11, 21, 31 und 41 auch trotz eines fehlerhaften zweiten Teilsystems SYS-2 oder trotz fehlerhafter Hydraulikleitungen 50, 60 gewährleistet ist, wodurch sich die Betriebssicherheit des Bremssystems erhöht.

Des Weiteren ist das jeweils in Fig. 1 und Fig. 2 dargestellte Bremssystem für die Funktion einer Parkbremse (auch Feststellbremse genannt) mit einem EPB-System ausgestattet, um das Fahrzeug im EPB-Modus sicher im Stillstand halten zu können. Das EPB-System umfasst eine erste elektrische, vorzugsweise elektromechanische Stelleinheit 13 und eine zweite elektrische, vorzugsweise elektromechanische Stelleinheit 43. Die erste Stelleinheit 13 wirkt auf die dem vorderen Rad VL zugeordnete Radbremse 11 und die zweite Stelleinheit 43 auf die dem vorderen Rad VR zugeordnete Radbremse 41. Das EPB-System selbst umfasst in den Ausführungsbeispielen keine eigene elektronische Steuereinheit (also keinen eigenen Mikroprozessor µP und keine eigene Speichereinrichtung SP), da gemäß Fig. 1 die erste Stelleinheit 13 über eine Steuerleitung 17 von der elektronischen Steuereinheit ECU-1 des ersten Teilsystems SYS-1 und die zweite Stelleinheit 43 über eine Steuerleitung 47 von der elektronischen Steuereinheit ECU-2 des zweiten Teilsystems SYS-2 angesteuert wird. Demgemäß ist der entsprechende Programmcode zum Betreiben des EPB-Systems in den Speichereinrichtungen SP-1 und SP-2 des ersten bzw. zweiten Teilsystems SYS-1 bzw. SYS-2 hinterlegt und wird durch den entsprechenden Mikroprozessor µP-1 bzw. µP-2 ausgeführt (vgl. Fig. 3).

Das EPB-System umfasst als Eingabe-Einrichtung ein Betätigungselement 80 (z. B. einen Schalter oder Taster), über das der Fahrer seinen Ansteuerbefehl eingibt. Der Ansteuerbefehl - typischerweise "Feststellbremse schließen" oder "Feststellbremse öffnen" - wird hier von der ersten elektronischen Steuereinheit ECU-1 erfasst und ausgewertet. Gemäß dem Ergebnis der Auswertung wird die erste Stelleinheit 13 der dem vorderen Rad VL zugeordneten Radbremse 11 betätigt. Da die Betätigung der zweiten Stelleinheit 43 der dem vorderen Rad VR zugeordneten Radbremse 41 gemäß Fig. 1 seitens der zweiten elektronischen Steuereinheit ECU-2 erfolgt, wird der Ansteuerbefehl über das erste Bussystem BUS-1 und/oder das zweite Bussystem BUS-2 von der ersten elektronischen Steuereinheit ECU-1 zu der zweiten elektronischen Steuereinheit ECU-2 übertragen. Aufgrund der parallel angeordneten Bussysteme BUS-1 und BUS-2 besteht Redundanz, so dass eine fehlertolerante Kommunikation unter den elektronischen Steuereinheiten ECU-1 und ECU-2 gewährleistet ist.

Auch ist es möglich, das EPB-System (also insbesondere die Parkbremsstelleinheiten 13, 43) unabhängig von einer Betätigung des Bedienelementes 80, also unabhängig vom Ansteuerwunsch des Fahrers zu betätigen. Dies erfolgt z. B. im Rahmen einer als HH-Funktion (Hill Holder) bekannten Berganfahrhilfe, die durch automatisches Schließen der Parkbremse ein Wegrollen des Fahrzeugs auf einer geneigten Fahrbahn verhindert und durch automatisches Öffnen der Parkbremse (beispielsweise in Abhängigkeit des Neigungswinkels und/oder dem vom Antriebsmotor des Fahrzeugs bereitgestellten Drehmoment) ein komfortables Anfahren des Fahrzeugs auf der geneigten Fahrbahn ermöglicht. Ferner können von dem EPB-System Bremsungen oder Notbremsungen selbstständig ausgeführt werden, insbesondere als Rückfallebene beispielsweise im AD- oder RCP-Betrieb.

Über die beiden Bussysteme BUS-1 und BUS-2 können die Teilsysteme SYS-1 und SYS-2 mit weiteren Fahrzeugsystemen, beispielsweise einem in Fig. 1 und Fig. 2 dargestellten dritten Teilsystem SYS-3, kommunizieren. Das dritte Teilsystem SYS-3 umfasst eine dritte elektronische Steuereinheit ECU-3 (mit zugeordnetem Mikroprozessor µP-3 und zugeordneter Speichereinrichtung SP-3; vgl. Fig. 3). Es wird hier (wenigstens) an dem ersten Akkumulator BAT-1 betrieben. Zur Kommunikation mit den beiden Teilsystemen SYS-1 und SYS-2 (und insbesondere den beiden elektronischen Steuereinheiten ECU-1 und ECU-2) ist gemäß Fig. 1 das dritte Teilsystem SYS-3 (und insbesondere die dritte elektronische Steuereinheit ECU-3) beispielhaft an das erste Bussystem BUS-1 angeschlossen.

Bei dem dritten Teilsystem SYS-3 handelt es sich in einer Ausführungsvariante um ein elektronisch gesteuertes Automatikgetriebe, das vom Fahrer über eine als Betätigungselement 90 (beispielsweise einen Wählhebel oder ein Wählrad) ausgebildete Eingabe-Einrichtung bedient wird. In der Park- oder P-Stellung des Betätigungselements 90 muss eine zusätzliche Sicherung des Fahrzeugs bewirkt werden, wozu herkömmlicherweise eine mechanische Sperre im Getriebe vorgesehen ist. Der Aufwand für eine solche mechanische Getriebesperre kann eingespart werden, indem das EPB-System (also insbesondere die Parkbremsstelleinheiten 13, 43) diese Funktion übernimmt. Es erfolgt also dann, wenn am Betätigungselement 90 die P-Stellung gewählt ist, ein automatisches Schließen der Parkbremse, und dann, wenn am Betätigungselement 90 die P-Stellung verlassen wird, ein automatisches Öffnen der Parkbremse.

Dazu wird die Stellung des Betätigungselements 90 von der dritten elektronischen Steuereinheit ECU-3 erfasst, ausgewertet und über das erste Bussystem BUS-1 parallel an die erste elektronische Steuereinheit ECU-1 und die zweite elektronische Steuereinheit ECU-2 übertragen, so dass von diesen gemäß Fig. 1 die erste Stelleinheit 13 der dem vorderen Rad VL zugeordneten Radbremse 11 und die zweite Stelleinheit 43 der dem vorderen Rad VR zugeordneten Radbremse 41 entsprechend betätigt werden können. Aufgrund der oben geschilderten Redundanzen kann somit immer wenigstens eine der beiden Stelleinheiten 13 und/oder 43 des EPB-Systems betätigt werden, um die Funktion der Getriebesperre mit Sicherheit zu gewährleisten.

Da aufgrund der bestehenden Redundanz immer wenigstens eine der beiden Stelleinheiten 13 und/oder 43 des EPB-Systems betätigt werden kann, kann das EPB-System neben der Funktion der Getriebesperre auch weitere Sicherheitsfunktionen übernehmen. Dies ist z. B. beim hochautomatisierten Fahren, insbesondere beim RCP-Betrieb des Fahrzeugs, der Fall, wenn das Fahrzeug ohne Einflussmöglichkeit des Fahrers fahren, steuern und einparken kann. Bei diesen Anwendungen bietet das EPB-System bei Ausfällen des ersten Teilsystems SYS-1 oder des zweiten Teilsystems SYS-2 eine weitere Rückfallebene, um beispielsweise Notbremsungen durchzuführen oder das Fahrzeug im Stillstand halten zu können.

Im Zusammenhang mit hochautomatisiertem Fahren, insbesondere beim RCP-Betrieb (während dessen sich der Fahrer möglicherweise sogar außerhalb des Fahrzeugs befindet), ist die Verfügbarkeit des zweiten Teilsystems SYS-2 ohnehin eingeschränkt, da aufgrund der fehlenden Einflussmöglichkeit des Fahrers keine Betätigung des Bremspedals 70 für Notbremsungen möglich ist. Dies kommt einem teilweisen (mechanischen) Ausfall des zweiten Teilsystems SYS-2 gleich. Allerdings ist dann aber davon auszugehen, dass die zugehörige elektronische Steuereinheit ECU-2 funktionsfähig ist, um wenigstens die zweite Stelleinheit 43 des EPB-Systems über die Steuerleitung 47 ansteuern zu können, falls es zu einem (vollständigen) Ausfall des ersten Teilsystems SYS-1 kommen sollte.

Für eine noch höhere Sicherheit kann gemäß Fig. 2 vorgesehen sein, dass das dritte Teilsystem SYS-3 (und insbesondere die dritte elektronische Steuereinheit ECU-3) nicht nur an eines der Bussysteme BUS-1 oder BUS 2 angeschlossen ist, sondern parallel an beide Bussysteme BUS-1 und BUS-2, um eine redundante Kommunikation mit den elektronischen Steuereinheiten ECU-1 und ECU-2 zu gewährleisten. Insbesondere in diesem Zusammenhang kann weiterhin vorgesehen sein, dass eine der Stelleinheiten 13 oder 43 des EPB-Systems von der elektronischen Steuereinheit ECU-3 des dritten Teilsystems SYS-3 direkt angesteuert wird. So ist gemäß Fig. 2 vorgesehen, dass die zweite Stelleinheit 43 des EPB-Systems über die Steuerleitung 47 von der elektronischen Steuereinheit ECU-3 des dritten Teilsystems SYS-3 angesteuert wird. Ein wesentlicher Vorteil des Kraftfahrzeug-Systems gemäß Fig. 2 besteht darin, dass das EPB-System bei (z. B. gleichzeitigen) Ausfällen des ersten Teilsystems SYS-1 und des zweiten Teilsystems SYS-2 eine weitere Rückfallebene in Gestalt des dritten Teilsystems SYS-3 bietet, um beispielsweise Notbremsungen durchzuführen oder das Fahrzeug im Stillstand halten zu können.

Dabei ist bei den Systemen gemäß Fig. 1 und Fig. 2 von Vorteil, wenn wie hier die beiden Stelleinheiten 13 und 43 des EPB-Systems auf die vorderen Räder VL und VR des Fahrzeugs wirken, da diese aufgrund der dynamischen Achslastverteilung einen erheblich größerer Bremskraftanteil als die hinteren Räder des Fahrzeugs übertragen können. Natürlich könnten aber die beiden Stelleinheiten 13 und 43 auch auf die hinteren Räder HL und HR des Fahrzeugs wirken.

Hinsichtlich der elektronischen Steuereinheiten ECU-1 bis ECU-3 ist anzumerken, dass diese - wie in Fig. 3 dargestellt - jeweils wenigstens einen Mikroprozessor µP und wenigstens eine Speichereinrichtung SP umfassen. Die jeweilige Speichereinrichtung SP enthält Programmcode zur Ausführung durch den jeweiligen Mikroprozessor µP im Zusammenhang mit der jeweils gewünschten Funktion (z. B. EPB, Getriebesperre, BBW-Betriebsbremsung, EBB, RCP, usw.). Dabei kann eine einzelne Steuereinheit ECU-1 bis ECU-3 durchaus auch zwei oder mehr dieser Funktionen kombinieren, um die Anzahl an im Fahrzeug erforderlichen Steuereinheiten und die damit verbundenen Kosten zu reduzieren.

Die elektronische Steuereinheit ECU-3 kann eine eigenständige Baugruppe bilden. So kann jeder der elektronischen Steuereinheiten ein eigenes Gehäuse mit eigenen Anschlüssen aufweisen. Auch können die elektronischen Steuereinheiten ECU-1 bis ECU-3 an unterschiedlichen Orten im Fahrzeug verbaut sein.

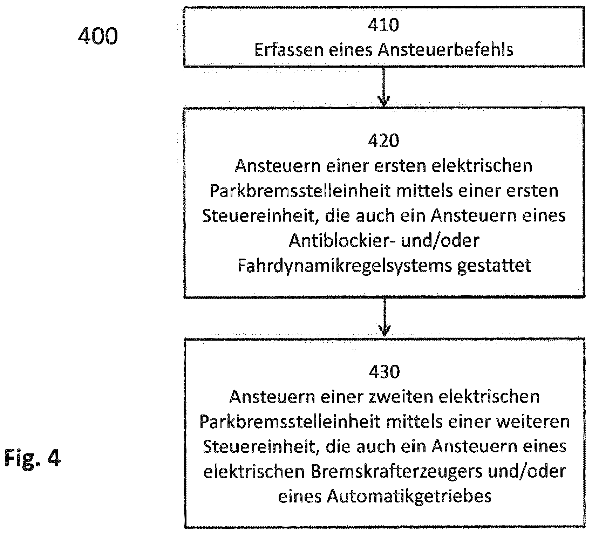

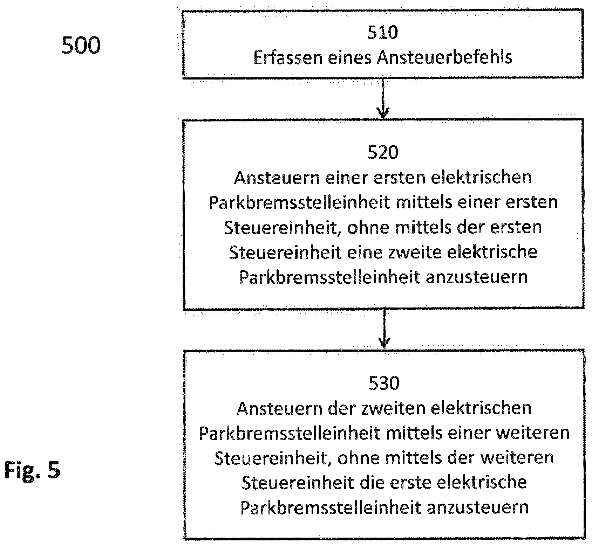

Die Figuren 4 und 5 veranschaulichen in Ablaufdiagramm 400, 500 zwei Ausführungsbeispiele von Verfahren zum Ansteuern eines Kraftfahrzeug-Systems gemäß der vorliegenden Offenbarung. Das jeweilige Verfahren kann von den in den Fign. 1 und 2 dargestellten Systemen oder einem anderweitig konfigurierten System durchgeführt werden.

Unter Bezugnahme auf Fig. 4 wird in einem ersten Schritt 410 ein Ansteuerbefehl erfasst. Der Ansteuerbefehl kann von einer der Steuereinheiten ECU-1 bis ECU-3 oder mehreren dieser Steuereinheiten ECU-1 bis ECU-3 erfasst werden. Bei dem Ansteuerbefehl handelt es sich gemäß einer Variante um einen Parkbremsbefehl seitens des Fahrers (eine Betätigung des Betätigungselements 80). In einer anderen Variante handelt es sich um einen Getriebesperrebefehl seitens des Fahrers (beispielsweise in einem Getriebesperremodus aufgrund einer Betätigung des Betätigungselements 90). In einer weiteren Variante kann es sich bei dem Ansteuerbefehl um einen Notbremsbefehl handeln. Der Notbremsbefehl kann systemseitig erzeugt werden, beispielsweise bei Ausfall einer Bremssystemkomponente.

Auf das Erfassen des Ansteuerbefehls werden in den Schritten 420 und 430 die erste Parkbremsstelleinheit 13 bzw. die zweite Parkbremsstelleinheit 43 angesteuert. Das Ansteuern der beiden Parkbremsstelleinheiten 13, 43 kann gleichzeitig oder sukzessiv erfolgen. Allgemein kann beispielsweise die erste Steuereinheit ECU-1 die ihr zugeordnete Parkbremsstelleinheit ansteuern und gleichzeitig einen Ansteuerbefehl über das Bussystem an die zweite Steuereinheit ECU-2 senden, damit diese die ihr zugeordnete Parkbremsstelleinheit ansteuert.

Konkret wird in Schritt 420 die erste elektrische Parkbremsstelleinheit 13 mittels der ersten Steuereinheit ECU-1 angesteuert. Wie oben geschildert, gestattet die erste Steuereinheit ECU-1 auch ein Ansteuern des Antiblockier- und/oder Fahrdynamikregelung des Teilsystems SYS-1. In Schritt 430 erfolgt ein Ansteuern der zweiten elektrischen Parkbremsstelleinheit 43 mittels der zweiten Steuereinheit ECU-2 (vgl. Fig. 1). Wie bereits geschildert, gestattet diese weitere Steuereinheit ECU-2 auch ein Ansteuern des elektrischen Bremskrafterzeugers innerhalb des Teilsystems SYS-2.

Durch das Integrieren der Parkbremsansteuerfunktionalität in die Steuereinheiten ECU-1 bis ECU-3, die auch für andere Steuerzwecke vorgesehen sind, kann eine separate Parkbrems-Steuereinheit entfallen. Die Systemkosten lassen sich auf diese Weise verringern. Ferner ist durch die Ansteuerbarkeit der beiden Parkbremsstelleinrichtungen 13, 43 mittels unterschiedlicher Steuereinheiten ECU-1 bis ECU-3 eine Redundanz dahingehend gegeben, dass auch bei Ausfall einer der Steuereinheiten ECU-1 bis ECU-3 noch wenigstens eine der Parkbremsstelleinheiten 13, 43 durch die verbleibende(n) Steuereinheit(en) ECU-1 bis ECU-3 ansteuerbar bleibt.

Unter Bezugnahme auf Fig. 5 beginnt das dort dargestellte Verfahren ebenfalls mit dem Erfassen eines Ansteuerbefehls in Schritt 510. Schritt 510 entspricht dem oben bereits erläuterten Schritt 410.

Anschließend erfolgt ein Ansteuern der ersten elektrischen Parkbremsstelleinheit 13 mittels der ersten Steuereinheit ECU-1 in Schritt 520 sowie der zweiten elektrischen Parkbremsstelleinheit 43 mittels der zweiten Steuereinheit ECU-2. Die beiden Ansteuerschritte 520, 530 können parallel oder nacheinander durchgeführt werden. So veranlasst die erste Steuereinheit ECU-1 die zweite Steuereinheit ECU-2, die Parkbremsstelleinheit 43 anzusteuern.

Da bei den Ausführungsbeispielen der Fign. 1 und 2 lediglich eine einzige Steuerleitung 17, 47 zwischen der Steuereinheit ECU-1 und der Parkbremsstelleinheit 13 sowie zwischen der Steuereinheit ECU-2 und der Parkbremsstelleinheit 43 vorhanden ist, erfolgt das Ansteuern der Parkbremsstelleinheit 13 in Schritt 520 derart, dass die Steuereinheit ECU-1 die Parkbremsstelleinheit 43 nicht ansteuert. In gleicher Weise steuert die weitere Steuereinheit ECU-2 bei einer Ansteuerung der Parkbremsstelleinheit 43 die andere Parkbremsstelleinheit 13 nicht an.

Da die Steuereinheiten ECU-1 und ECU-2 jeweils nur eine einzige der beiden Parkbremsstelleinheiten 13, 43 ansteuern, können die Steuereinheiten kompakter gestaltet werden. Insbesondere benötigt jede dieser Steuereinheiten ECU-1 und ECU-2 jeweils Ansteuerkomponenten (z. B. Leistungselektronik, H-Brücke, usw.) für lediglich eine einzige Parkbremsstelleinheit 13, 43. Dies spart Bauraum und reduziert ferner die thermische Belastung der jeweiligen Steuereinheit ECU-1 und ECU-2. Gleichzeitig ist eine Redundanz dahingehend vorhanden, dass bei einem Ausfall einer dieser Steuereinheiten ECU-1 oder ECU-2 die verbleibende Steuereinheit ECU-1 oder ECU-2 noch immer eine Ansteuerung wenigstens noch einer Parkbremsstelleinheit 13, 43 gestatten.

## Patentansprüche

1. System für ein Kraftfahrzeug, umfassend:
eine erste elektrische Parkbremsstelleinheit (13), die einem ersten Fahrzeugrad (VL) zugeordnet ist;
eine zweite elektrische Parkbremsstelleinheit (43), die einem zweiten Fahrzeugrad (VR) zugeordnet ist;
eine erste Steuereinheit (ECU-1) mit wenigstens einem ersten Mikroprozessor (µP), wobei die erste Steuereinheit (ECU-1) zum Ansteuern wenigstens der ersten elektrischen Parkbremsstelleinheit (13) zur Erfüllung einer Parkbremsfunktion ausgelegt ist; und
eine zweite Steuereinheit (ECU-2) mit wenigstens einem zweiten Mikroprozessor (µP), wobei die zweite Steuereinheit (ECU-2) zum Ansteuern wenigstens der zweiten elektrischen Parkbremsstelleinheit (43) zur Erfüllung einer Parkbremsfunktion ausgelegt ist,
eine Eingabe-Einrichtung (80), die ausgebildet ist, eine Parkbremsanforderung zu erzeugen;
ein Steuerleitungssystem (17, 47), welches die erste Steuereinheit (ECU-1) und die eine zweite Steuereinheit (ECU-2) auf der einen Seite mit der ersten elektrischen Parkbremsstelleinheit (13) und der zweiten elektrischen Parkbremsstelleinheit (43) auf der anderen Seite verbindet, wobei das Steuerleitungssystem (17, 47) aus einer ersten Steuerleitung (17) zwischen der ersten Steuereinheit (ECU-1) und der ersten elektrischen Parkbremsstelleinheit (13) sowie einer zweiten Steuerleitung (47) zwischen der zweiten Steuereinheit (ECU-2) und der zweiten elektrischen Parkbremsstelleinheit (43) besteht;
wobei die erste Steuereinheit (ECU-1) zum Ansteuern eines Antiblockierund/oder Fahrdynamikregelsystems (SYS-1) ausgelegt ist, die zweite Steuereinheit (ECU-2) zum Ansteuern eines elektrischen Bremskrafterzeugers (SYS-2) ausgelegt ist, und der elektrische Bremskrafterzeuger (SYS-2) eine dritte elektrische Stelleinheit umfasst, die zur Erzeugung wenigstens eines Bremskraftanteils auf den Hauptzylinder einzuwirken ausgebildet ist;
wobei die erste und die zweite Steuereinheit (ECU-1, ECU-2) separate Gehäuse haben und räumlich getrennt voneinander sind;
wobei die Eingabe-Einrichtung (80) mit der ersten Steuereinheit (ECU-1) elektrisch gekoppelt ist, um der ersten Steuereinheit (ECU-1) die Parkbremsanforderung zu signalisieren;
wobei die erste Steuereinheit (ECU-1) ausgebildet ist, die erste elektrische Parkbremsstelleinheit (13) in Abhängigkeit der Parkbremsanforderung anzusteuern;
wobei eine Kommunikationsverbindung (BUS-1; BUS-2) zwischen der ersten Steuereinheit (ECU-1) und der zweiten Steuereinheit (ECU-2) vorgesehen ist; wobei die erste Steuereinheit (ECU-1) und die zweite Steuereinheit (ECU-2) dazu ausgelegt sind, über die Kommunikationsverbindung (BUS-1; BUS-2) miteinander zu kommunizieren; und
die erste Steuereinheit (ECU-1) dazu ausgelegt ist, die Parkbremsanforderung über die Kommunikationsverbindung (BUS-1; BUS-2) an die zweite Steuereinheit (ECU-2) zu kommunizieren.

2. System nach Anspruch 1, ferner umfassend
ein Ansteuersystem, welches zur Ansteuerung der ersten elektrischen Parkbremsstelleinheit (13) und der zweiten elektrischen Parkbremsstelleinheit (43) vorgesehen ist, wobei das Ansteuersystem aus der ersten Steuereinheit (ECU-1) und der zweiten Steuereinheit (ECU-2) besteht;
und/oder
eine dritte Steuereinheit (ECU-3) mit wenigstens einem dritten Mikroprozessor (µP), wobei die dritte Steuereinheit (ECU-3) ausgelegt ist, ein Automatikgetriebe (SYS-3) anzusteuern.

3. System nach Anspruch 1 oder 2, wenn das System zumindest eine dritte Steuereinheit (ECU-3) umfasst, wobei
die dritte Steuereinheit (ECU-3) ausgelegt ist, ein Automatikgetriebe (SYS-3) anzusteuern, das ohne mechanische Getriebesperre ausgebildet ist, und die zweite elektrische Parkbremsstelleinheit (43) in einem Getriebesperrenmodus anzusteuern; wobei,
optional, die dritte Steuereinheit (ECU-3) dazu ausgelegt ist, im Getriebesperrenmodus über eine Kommunikationsverbindung (BUS-1; BUS-2) zwischen der ersten Steuereinheit (ECU-1) und der dritten Steuereinheit (ECU-3) mit der ersten Steuereinheit (ECU-1) zu kommunizieren, um diese zur Ansteuerung der ersten elektrischen Parkbremsstelleinheit (13) zu veranlassen.

4. System nach einem der vorhergehenden Ansprüche, ferner umfassend
ein erstes elektrisches Versorgungssystem (BAT-1) für die erste Steuereinheit (ECU-1) und/oder die erste elektrische Parkbremsstelleinheit (13); und
ein zweites elektrisches Versorgungssystem (BAT-2) für die zweite Steuereinheit (ECU-2) und/oder die zweite elektrische Parkbremsstelleinheit (43).

5. System nach einem der vorhergehenden Ansprüche, wobei
das erste Fahrzeugrad ein rechtes Vorderrad (VR) ist und/oder das zweite Fahrzeugrad ein linkes Vorderrad (VL) ist; oder
wobei das erste Fahrzeugrad ein rechtes Hinterrad (HR) und/oder das zweite Fahrzeuggrad ein linkes Hinterrad (HL) ist.

6. System nach einem der vorhergehenden Ansprüche, ferner umfassend
einen elektrischen Generator (25; 35), der mit einem rechten Hinterrad (HR) und/oder einem linken Hinterrad (HL) des Fahrzeugs koppelbar ist; und/oder
wobei die erste Steuereinheit (ECU-1) und die zweite Steuereinheit (ECU-2) räumlich getrennt voneinander vorgesehen sind.

7. Verfahren zum Ansteuern eines Kraftfahrzeug-Systems umfassend eine erste elektrische Parkbremsstelleinheit (13), die einem ersten Fahrzeugrad (VL) zugeordnet ist, eine zweite elektrische Parkbremsstelleinheit (43), die einem zweiten Fahrzeugrad (VR) zugeordnet ist, eine erste Steuereinheit (ECU-1) mit wenigstens einem ersten Mikroprozessor (µP), wobei die erste Steuereinheit (ECU-1) zum Ansteuern wenigstens der ersten Parkbremsstelleinheit (13) zur Erfüllung einer Parkbremsfunktionsowie eines Antiblockier- und/oder Fahrdynamikregelsystems (SYS-1) ausgelegt ist, und eine zweite Steuereinheit (ECU-2) mit wenigstens einem zweiten Mikroprozessor (µP), wobei die zweite Steuereinheit (ECU-2; ECU-3) zum Ansteuern wenigstens der zweiten Parkbremsstelleinheit (43) zur Erfüllung einer Parkbremsfunktion sowie eines elektrischen Bremskrafterzeugers (SYS-2) ausgelegt ist, und die erste und die zweite Steuereinheit (ECU-1, ECU2) separate Gehäuse haben und räumlich getrennt voneinander sind, wobei das Verfahren umfasst:
Ansteuern der ersten elektrischen Parkbremsstelleinheit (13) mittels der ersten Steuereinheit (ECU-1) auf Erhalt einer Parkbremsenanforderung von einer Eingabe-Einrichtung (80);
Übermittlung der Parkbremsenanforderung an die zweite Steuereinheit (ECU-2) über eine redundant ausgelegte Kommunikationsverbindung zwischen der ersten und der zweiten Steuereinheit (ECU-1, ECU-2), über die die Steuereinheiten (ECU-1, ECU-2) miteinander kommunizieren;
Ansteuern der zweiten elektrischen Parkbremsstelleinheit (43) mittels der zweiten Steuereinheit (ECU-2);
Ansteuern eines Antiblockier- und/oder Fahrdynamikregelsystems (SYS-1) mittels der ersten Steuereinheit (ECU-1); und
Ansteuern eines elektrischen Bremskrafterzeugers (SYS-2) mittels der zweiten Steuereinheit (ECU-2), wobei der Bremskrafterzeugers eine dritte elektrische Stelleinheit umfasst, die zur Erzeugung wenigstens eines Bremskraftanteils auf den Hauptzylinder einzuwirken ausgebildet ist.

8. Verfahren nach Anspruch 7, ferner umfassend
Erfassen eines Ansteuerbefehls, wobei der Ansteuerbefehl eine Parkbremsanforderung seitens des Fahrers, eine Getriebesperranforderung seitens des Fahrers oder eine Notbremsanforderung ist, wobei das Ansteuern der ersten elektrischen Parkbremsstelleinheit (13) und der zweiten elektrischen Parkbremsstelleinheit (43) auf das Erfassen des Ansteuerbefehls erfolgt.

9. Computerprogramm mit Programmcode zum Durchführen des Verfahrens nach Anspruch 7 oder 8, wenn das Verfahren von der ersten Steuereinheit (ECU-1) und der zweiten Steuereinheit (ECU-2) durchgeführt wird.

10. Steuergerätesystem umfassend:
das Computerprogramm nach Anspruch 9; und
die erste Steuereinheit (ECU-1) und die zweite Steuereinheit (ECU-2), die zum Ausführen des Computerprogramms ausgebildet sind.

## Claims

1. System for a motor vehicle, comprising:
a first electric parking brake actuation unit (13) which is assigned to a first vehicle wheel (VL);
a second electric parking brake actuation unit (43) which is assigned to a second vehicle wheel (VR);
a first control unit (ECU-1) having at least a first microprocessor (µP), wherein the first control unit (ECU-1) is configured to drive at least the first electric parking brake actuation unit (13) to fulfill a parking brake function; and
a second control unit (ECU-2) having at least a second microprocessor (µP), wherein the second control unit (ECU-2) is configured to drive at least the second electric parking brake actuation unit (43) to fulfill a parking brake function;
an input device (80) which is designed to generate a parking brake request;
a control line system (17, 47) which connects the first control unit (ECU-1) and one second control unit (ECU-2) on one side to the first electric parking brake actuation unit (13) and the second electric parking brake actuation unit (43) on the other side, wherein the control line system (17, 47) is composed of a first control line (17) between the first control unit (ECU-1) and the first electric parking brake actuation unit (13) as well as a second control line (47) between the second control unit (ECU-2) and the second electric parking brake actuation unit (43);
wherein the first control unit (ECU-1) is configured to drive an anti-lock and/or vehicle movement dynamics control system (SYS-1), the second control unit (ECU-2) is configured to drive an electric braking force generator (SYS-2), and the electric braking force generator (SYS-2) comprises a third electric actuation unit which is designed to act on the master cylinder to generate at least a braking force portion;
wherein the first and second control units (ECU-1, ECU-2) have separate housings and are spatially separate from one another;
wherein the input device (80) is electrically coupled to the first control unit (ECU-1) in order to signal the parking brake request to the first control unit (ECU-1);
wherein the first control unit (ECU-1) is designed to drive the first electric parking brake actuation unit (13) as a function of the parking brake request;
wherein a communication link (BUS-1; BUS-2) is provided between the first control unit (ECU-1) and the second control unit (ECU-2); wherein the first control unit (ECU-1) and the second control unit (ECU-2) are configured to communicate with one another via the communication link (BUS-1; BUS-2); and
the first control unit (ECU-1) is configured to communicate the parking brake request to the second control unit (ECU-2) via the communication link (BUS-1; BUS-2).

2. System according to Claim 1, also comprising:
a drive system which is provided for driving the first electric parking brake actuation unit (13) and the second electric parking brake actuation unit (43), wherein the drive system is composed of the first control unit (ECU-1) and the second control unit (ECU-2);
and/or
a third control unit (ECU-3) having at least a third microprocessor (µP), wherein the third control unit (ECU-3) is configured to drive an automatic transmission (SYS-3).

3. System according to Claim 1 or 2, if the system comprises at least a third control unit (ECU-3), wherein
the third control unit (ECU-3) is configured to drive an automatic transmission (SYS-3) which is embodied without a mechanical gear lock, and to drive the second electric parking brake actuation unit (43) in a gear lock mode; wherein
optionally, the third control unit (ECU-3) is configured to communicate, in the gear lock mode, via a communication link (BUS-1; BUS-2) between the first control unit (ECU-1) and the third control unit (ECU-3), with the first control unit (ECU-1) in order to cause it to drive the first electric parking brake actuation unit (13).

4. System according to one of the preceding claims, also comprising
a first electrical supply system (BAT-1) for the first control unit (ECU-1) and/or the first electric parking brake actuation unit (13); and
a second electrical supply system (BAT-2) for the second control unit (ECU-2) and/or the second electric parking brake actuation unit (43).

5. System according to one of the preceding claims, wherein
the first vehicle wheel is a right-hand front wheel (VR) and/or the second vehicle wheel is a left-hand front wheel (VL); or
wherein the first vehicle wheel is a right-hand rear wheel (HR) and/or the second vehicle wheel is a left-hand rear wheel (HL).

6. System according to one of the preceding claims, also comprising
an electric generator (25; 35) which can be coupled to a right-hand rear wheel (HR) and/or to a left-hand rear wheel (HL) of the vehicle; and/or
wherein the first control unit (ECU-1) and the second control unit (ECU-2) are provided spatially separate from one another.

7. Method for controlling a motor vehicle system comprising a first electric parking brake actuation unit (13) which is assigned to a first vehicle wheel (VL), a second electric parking brake actuation unit (43) which is assigned to a second vehicle wheel (VR), a first control unit (ECU-1) having at least a first microprocessor (µP), wherein the first control unit (ECU-1) is configured to drive at least the first parking brake actuation unit (13) to fulfill a parking brake function and an anti-lock and/or vehicle movement dynamics control system (SYS-1), and a second control unit (ECU-2) having at least a second microprocessor (µP), wherein the second control unit (ECU-2; ECU-3) is configured to drive at least the second parking brake actuation unit (43) to fulfill a parking brake function and an electric braking force generator (SYS-2), and the first and second control units (ECU-1, ECU-2) have separate housings and are spatially separate from one another, wherein the method comprises:
driving the first electric parking brake actuation unit (13) by means of the first control unit (ECU-1) upon receipt of a parking brake request from an input device (80);
transmitting the parking brake request to the second control unit (ECU-2) via a communication link, which is of redundant design, between the first and second control units (ECU-1, ECU-2), via which the control units (ECU-1, ECU-2) communicate with one another;
driving the second electric parking brake actuation unit (43) by means of the second control unit (ECU-2);
driving an anti-lock and/or vehicle movement dynamics control system (SYS-1) by means of the first control unit (ECU-1); and
driving an electric braking force generator (SYS-2) by means of the second control unit (ECU-2), wherein the braking force generator comprises a third electric actuation unit which is designed to act on the master cylinder to generate at least a braking force portion.

8. Method according to Claim 7, also comprising
registering a drive command, wherein the drive command is a parking brake request by the driver, a gear lock request by the driver or an emergency braking request, wherein the driving of the first electric parking brake actuation unit (13) and of the second electric parking brake actuation unit (43) takes place in response to the registering of the drive command.

9. Computer programme with programme code for carrying out the method according to Claim 7 or 8 when the method is carried out by the first control unit (ECU-1) and the second control unit (ECU-2).

10. Control device system comprising:
the computer programme according to Claim 9; and
the first control unit (ECU-1) and the second control unit (ECU-2), which are designed to execute the computer programme.

## Revendications

1. Système pour véhicule automobile, comprenant :
une première unité d'actionnement électrique de frein de stationnement (13), qui est associée à une première roue de véhicule (VL) ;
une deuxième unité d'actionnement électrique de frein de stationnement (43), qui est associée à une deuxième roue de véhicule (VR) ;
une première unité de commande (ECU-1) dotée d'au moins un premier microprocesseur (µP), dans lequel la première unité de commande (ECU-1) est conçue pour commander au moins la première unité d'actionnement électrique de frein de stationnement (13) pour remplir une fonction de frein de stationnement ; et
une deuxième unité de commande (ECU-2) dotée d'au moins un deuxième microprocesseur (µP), dans lequel la deuxième unité de commande (ECU-2) est conçue pour commander au moins la deuxième unité d'actionnement électrique de frein de stationnement (43) pour remplir une fonction de frein de stationnement,
un dispositif d'entrée (80) qui est conçu pour générer une demande de frein de stationnement ;
un système de ligne de commande (17, 47) qui relie la première unité de commande (ECU-1) et la deuxième unité de commande (ECU-2) d'un côté à la première unité d'actionnement électrique de frein de stationnement (13) et de l'autre côté à la deuxième unité d'actionnement électrique de frein de stationnement (43), dans lequel le système de ligne de commande (17, 47) se compose d'une première ligne de commande (17) entre la première unité de commande (ECU-1) et la première unité d'actionnement électrique de frein de stationnement (13) et d'une deuxième ligne de commande (47) entre la deuxième unité de commande (ECU-2) et la deuxième unité d'actionnement électrique de frein de stationnement (43) ;
dans lequel la première unité de commande (ECU-1) est conçue pour commander un système de contrôle antiblocage et/ou de dynamique de conduite (SYS-1), la deuxième unité de commande (ECU-2) est conçue pour commander un générateur électrique de force de freinage (SYS-2), et le générateur électrique de force de freinage (SYS-2) comprend une troisième unité d'actionnement électrique conçue pour agir sur le maître-cylindre afin de générer au moins une composante de la force de freinage ;
dans lequel la première et la deuxième unité de commande (ECU-1, ECU-2) présentent des boîtiers distincts et sont spatialement séparées l'une de l'autre ;
dans lequel le dispositif d'entrée (80) est couplé électriquement à la première unité de commande (ECU-1) pour signaler la demande de frein de stationnement à la première unité de commande (ECU-1) ;
dans lequel la première unité de commande (ECU-1) est conçue pour commander la première unité d'actionnement électrique de frein de stationnement (13) en réponse à la demande de frein de stationnement ;
dans lequel une liaison de communication (BUS-1 ; BUS-2) est prévue entre la première unité de commande (ECU-1) et la deuxième unité de commande (ECU-2) ; dans lequel la première unité de commande (ECU-1) et la deuxième unité de commande (ECU-2) sont conçues pour communiquer l'une avec l'autre par l'intermédiaire de la liaison de communication (BUS-1 ; BUS-2) ; et
la première unité de commande (ECU-1) est conçue pour communiquer la demande de frein de stationnement à la deuxième unité de commande (ECU-2) par l'intermédiaire de la liaison de communication (BUS-1 ; BUS-2).

2. Système selon la revendication 1, comprenant en outre :
un système de commande qui est prévu pour commander la première unité d'actionnement électrique de frein de stationnement (13) et la deuxième unité d'actionnement électrique de frein de stationnement (43), dans lequel le système de commande se compose de la première unité de commande (ECU-1) et de la deuxième unité de commande (ECU-2) ;
et/ou
une troisième unité de commande (ECU-3) dotée d'au moins un troisième microprocesseur (µP), dans lequel la troisième unité de commande (ECU-3) est conçue pour commander une boîte de vitesse automatique (SYS-3).

3. Système selon la revendication 1 ou 2, lorsque le système comprend au moins une troisième unité de commande (ECU-3), dans lequel
la troisième unité de commande (ECU-3) est conçue pour commander une boîte de vitesse automatique (SYS-3) qui est réalisée sans comporter de verrouillage mécanique de la boîte de vitesse, et pour commander la deuxième unité d'actionnement électrique de frein de stationnement (43) dans un mode de verrouillage de la boîte de vitesse ; dans lequel,
de manière facultative, la troisième unité de commande (ECU-3) est conçue pour communiquer avec la première unité de commande (ECU-1) dans le mode de verrouillage de la boîte de vitesse par l'intermédiaire d'une liaison de communication (BUS-1 ; BUS-2) entre la première unité de commande (ECU-1) et la troisième unité de commande (ECU-3) afin de provoquer la commande par cette dernière de la première unité d'actionnement électrique de frein de stationnement (13).

4. Système selon l'une des revendications précédentes, comprenant en outre
un premier système d'alimentation électrique (BAT-1) destiné à la première unité de commande (ECU-1) et/ou à la première unité d'actionnement électrique de frein de stationnement (13) ; et
un deuxième système d'alimentation électrique (BAT-2) destiné à la deuxième unité de commande (ECU-2) et/ou à la deuxième unité d'actionnement électrique de frein de stationnement (43).

5. Système selon l'une des revendications précédentes, dans lequel
la première roue de véhicule est une roue avant droite (VR) et/ou la deuxième roue de véhicule est une roue avant gauche (VL) ; ou
dans lequel la première roue de véhicule est une roue arrière droite (HR) et/ou la deuxième roue de véhicule est une roue arrière gauche (HL).

6. Système selon l'une des revendications précédentes, comprenant en outre
un générateur électrique (25 ; 35) qui peut être couplé à une roue arrière droite (HR) et/ou à une roue arrière gauche (HL) du véhicule ; et/ou
dans lequel la première unité de commande (ECU-1) et la deuxième unité de commande (ECU-2) sont prévues spatialement séparées l'une de l'autre.

7. Procédé de commande d'un système de véhicule automobile comprenant une première unité d'actionnement électrique de frein de stationnement (13), qui est associée à une première roue de véhicule (VL), une deuxième unité d'actionnement électrique de frein de stationnement (43), qui est associée à une deuxième roue de véhicule (VR), une première unité de commande (ECU-1) dotée d'au moins un premier microprocesseur (µP), dans lequel la première unité de commande (ECU-1) est conçue pour commander au moins la première unité d'actionnement de frein de stationnement (13) pour remplir une fonction de frein de stationnement et un système de contrôle antiblocage et/ou de dynamique de conduite (SYS-1), et une deuxième unité de commande (ECU-2) dotée d'au moins un deuxième microprocesseur (µP), dans lequel la deuxième unité de commande (ECU-2 ; ECU-3) est conçue pour commander au moins la deuxième unité d'actionnement de frein de stationnement (43) pour remplir une fonction de frein de stationnement et un générateur de force de freinage électrique (SYS-2), et la première et la deuxième unité de commande (ECU-1, ECU-2) présentent des boîtiers distincts et sont spatialement séparées l'une de l'autre, dans lequel le procédé comprend :
la commande de la première unité d'actionnement électrique de frein de stationnement (13) au moyen de la première unité de commande (ECU-1) lors de la réception d'une demande de frein de stationnement d'un dispositif d'entrée (80) ;
le transfert de la demande de frein de stationnement à la deuxième unité de commande (ECU-2) par une liaison de communication conçue de manière redondante entre la première et la deuxième unité de commande (ECU-1, ECU-2), par l'intermédiaire de laquelle les unités de commande (ECU-1, ECU-2) communiquent l'une avec l'autre ;
la commande de la deuxième unité d'actionnement électrique de frein de stationnement (43) au moyen de la deuxième unité de commande (ECU-2) ;
la commande d'un système de contrôle antiblocage et/ou de dynamique de conduite (SYS-1) au moyen de la première unité de commande (ECU-1) ; et
la commande d'un générateur électrique de force de freinage (SYS-2) au moyen de la deuxième unité de commande (ECU-2), dans lequel le générateur de force de freinage comprend une troisième unité d'actionnement électrique conçue pour agir sur le maître-cylindre afin de générer au moins une composante de la force de freinage.

8. Procédé selon la revendication 7, comprenant en outre
la détection d'un ordre de commande, dans lequel l'ordre de commande est une demande de frein de stationnement provenant du conducteur, une demande de verrouillage de boîte de vitesse provenant du conducteur ou une demande de freinage d'urgence, dans lequel la commande de la première unité d'actionnement électrique de frein de stationnement (13) et de la deuxième unité d'actionnement électrique de frein de stationnement (43) est effectuée lors de la détection de l'ordre de commande.

9. Programme d'ordinateur comprenant un code de programme destiné à mettre en oeuvre le procédé selon la revendication 7 ou 8 lorsque le procédé est mis en oeuvre par la première unité de commande (ECU-1) et la deuxième unité de commande (ECU-2).

10. Système d'appareil de commande comprenant :
le programme d'ordinateur selon la revendication 9 ; et
la première unité de commande (ECU-1) et la deuxième unité de commande (ECU-2), qui sont conçues pour exécuter le programme d'ordinateur.
